(19)

Europäisches Patentamt

European Patent Office

Office européen des brevets

(11) **EP 4 579 817 A1**

(12) **EUROPEAN PATENT APPLICATION**
published in accordance with Art. 153(4) EPC

(43) Date of publication:
**02.07.2025 Bulletin 2025/27**

(21) Application number: **23859304.0**

(22) Date of filing: **28.08.2023**

(51) International Patent Classification (IPC):
**H01M 4/62** (2006.01)        **H01M 4/13** (2010.01)
**H01M 10/0525** (2010.01)

(52) Cooperative Patent Classification (CPC):
**H01M 4/13; H01M 4/62; H01M 10/0525;**
**Y02E 60/10**

(86) International application number:
**PCT/CN2023/115279**

(87) International publication number:
**WO 2024/046274 (07.03.2024 Gazette 2024/10)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority:   **29.08.2022   CN 202211047596**

(71) Applicant: **BYD Company Limited**
**Shenzhen, Guangdong 518118 (CN)**

(72) Inventors:
• **LV, Yuqi**
  **Shenzhen, Guangdong 518118 (CN)**
• **AO, Junxuan**
  **Shenzhen, Guangdong 518118 (CN)**
• **JIN, Jing**
  **Shenzhen, Guangdong 518118 (CN)**
• **LEI, Yudong**
  **Shenzhen, Guangdong 518118 (CN)**

(74) Representative: **Taor, Simon Edward William et al**
**Venner Shipley LLP**
**200 Aldersgate**
**London EC1A 4HD (GB)**

(54) **POSITIVE ELECTRODE SHEET, SECONDARY BATTERY AND ELECTRIC DEVICE**

(57)     A positive electrode sheet (10), a secondary battery (100), and an electric device (1000). The positive electrode sheet (10) comprises a positive electrode current collector (11), and a first positive electrode coating (12) and a second positive electrode coating (13) sequentially stacked on the positive electrode current collector (11). The first positive electrode coating (12) comprises a first positive electrode active material and an inorganic filler. The number of particle accumulation layers in the first positive electrode coating (12) is defined to satisfy the following relation: $n = T \times (M + 1)/(M \times D^1_v50 + D^2_v50)$, and n is in a range of from 4 to 7, wherein T is the thickness of the first positive electrode coating (12), the unit is $\mu m$, M is the mass ratio of the first positive electrode active material to the inorganic filler contained in the first positive electrode coating (12), $D^1_v50$ is the median particle size of the first positive electrode active material, $D^2_v50$ is the median particle size of the inorganic filler, $D^1_v50$ is 0.6 $\mu m$ to 1.2 $\mu m$, and $D^2_v50$ is 0.6 $\mu m$ to 1.5 $\mu m$.

FIG. 1B

EP 4 579 817 A1

**Description**

## CROSS-REFERENCE TO RELATED APPLICATION

This application claims priority to and benefits of Chinese Patent Application No. 202211047596.1, filed on August 29, 2022. The entire content of the above-referenced application is incorporated herein by reference.

## FIELD

The present disclosure relates to the field of battery technologies, and specifically to a positive electrode, a secondary battery, and an electrical device.

## BACKGROUND

Secondary batteries have been widely used in consumer electronics products (such as mobile phones and tablet computers) and electric vehicles. However, when a secondary battery is penetrated by a nail, squeezed, impacted, or otherwise abused, a short circuit is likely to occur in the battery to release a large amount of Joule heat, leading to thermal runaway. Among short-circuit modes commonly seen in batteries, the short circuit caused by the contact between the positive electrode current collector (e.g., aluminum foil) and the negative electrode active material layer releases the most heat and is the most dangerous short-circuit mode of batteries. Therefore, it is necessary to provide effective safety measures against this short circuit mode.

## SUMMARY

Therefore, embodiments of the present disclosure provide a positive electrode, a secondary battery, and an electrical device, to effectively solve the problem of thermal runaway caused by the positive electrode current collector of the battery contacting the negative electrode, and control the increase in the internal resistance of the battery within a small range so as not to affect the electrochemical performance of the battery during normal operation.

According to a first aspect, the present disclosure further provides a positive electrode, including:

a positive electrode current collector;
a first positive electrode coating, stacked on at least one surface of the positive electrode current collector, and including a first positive electrode active material and an inorganic filler having no electrochemical activity; and
a second positive electrode coating, stacked on a surface of the first positive electrode coating facing away from the positive electrode current collector, and including a second positive electrode active material;
a number n of particle packing layers in the first positive electrode coating being defined to satisfy the following relational expression:

$$n = T \times (M+1)/(M \times D^1_v 50 + D^2_v 50),$$

and n ranges from 4 to 7;
where T represents a thickness of the first positive electrode coating, measured in $\mu m$; M represents a mass ratio of the first positive electrode active material to the inorganic filler; and $D^1_v 50$ represents a median particle size of the first positive electrode active material, measured in $\mu m$, and $D^2_v 50$ represents a median particle size of the inorganic filler, measured in $\mu m$; and where $D^1_v 50$ ranges from 0.6 $\mu m$ to 1.2 $\mu m$, and $D^2_v 50$ ranges from 0.6 $\mu m$ to 1.5 $\mu m$.

In the positive electrode according to the first aspect of the present disclosure, a relationship is established between the thickness of the first positive electrode coating and the mass ratio of the first positive electrode active material to the inorganic filler, the median particle size of the first positive electrode active material, n is controlled to be within a range of 4 to 7, the median particle size of the particles of the first positive electrode active material is controlled within a range of 0.6 $\mu m$ to 1.2 $\mu m$, and the median particle size of the inorganic filler is controlled within a range of 0.6 $\mu m$ to 1.5 $\mu m$. This ensures that the number of packing layers and density of particles in the first positive electrode coating are appropriate, to effectively protect the positive electrode current collector in an abnormal case such as that where the battery is penetrated by a nail or squeezed, thereby preventing the positive electrode current collector from contacting the negative electrode to cause thermal runaway and prevent the internal resistance of the battery during normal operation from becoming too large to affect the electrochemical performance.

In an embodiment of the present disclosure, $D^1_v50$ ranges from 0.6 $\mu$m to 0.9 $\mu$m.

In an embodiment of the present disclosure, T ranges from 2 $\mu$m to 10 $\mu$m.

In an embodiment of the present disclosure, T ranges from 4 $\mu$m to 7 $\mu$m.

In an embodiment of the present disclosure, M ranges from 1 to 5.

In an embodiment of the present disclosure, a thermal decomposition temperature of the inorganic filler is greater than or equal to 300°C.

In an embodiment of the present disclosure, the inorganic filler includes one or more of boehmite, alumina, zirconia, silica, or magnesium hydroxide.

In an embodiment of the present disclosure, the first positive electrode active material includes one or more of lithium iron phosphate, lithium manganese iron phosphate, lithium vanadium phosphate, lithium vanadyl phosphate, or lithium vanadium fluorophosphate; and the second positive electrode active material includes one or more of lithium cobaltate, lithium manganate, lithium nickelate, lithium vanadate, lithium titanate, lithium nickel manganese oxide, lithium nickel cobalt oxide, lithium nickel cobalt manganate, lithium nickel cobalt aluminum oxide, or a lithium-rich manganese-based material.

In an embodiment of the present disclosure, a median particle size of the second positive electrode active material ranges from 6 $\mu$m to 18 $\mu$m.

In an embodiment of the present disclosure, the first positive electrode coating further includes a first binder and a first conductive agent, and the second positive electrode coating further includes a second binder and a second conductive agent.

In an embodiment of the present disclosure, a percentage by weight of the first binder in the first positive electrode coating is greater than a percentage by weight of the second binder in the second positive electrode coating.

In an embodiment of the present disclosure, a percentage by weight of the first binder in the first positive electrode coating ranges from 5% to 10%; and a percentage by weight of the first conductive agent in the first positive electrode coating ranges from 1% to 3%.

In an embodiment of the present disclosure, the first binder and the second binder independently include one or more of polyvinylidene fluoride (PVDF), a vinylidene fluoride-hexafluoropropylene copolymer, a vinylidene fluoride-acrylic acid copolymer, polytetrafluoroethylene (PTFE), polyacrylic acid (PAA), polyacrylate, polyvinyl alcohol (PVA), polyimide (PI), polyurethane, epoxy resin, styrene-butadiene rubber (SBR), fluorinated rubber, or sodium carboxymethyl cellulose (CMC-Na).

In an embodiment of the present disclosure, the first conductive agent and the second conductive agent respectively include one or more of conductive carbon black, graphite, carbon fiber, carbon nanotubes, or graphene.

In an embodiment of the present disclosure, the first positive electrode coating includes the following components in percentage by weight: 50% to 85% of the first positive electrode active material, 10% to 40% of the inorganic filler, 5% to 10% of the first binder, and 1% to 3% of the first conductive agent.

In an embodiment of the present disclosure, the second positive electrode coating includes the following components in percentage by weight: 90% to 99% of the second positive electrode active material, 0.5% to 1.5% of the second binder, and 0.5% to 1.5% of the second conductive agent.

According to a second aspect, the present disclosure provides a secondary battery, including the positive electrode according to the first aspect of the present disclosure.

The secondary battery according to the second aspect of the present disclosure has low internal resistance and good safety performance.

According to a third aspect, the present disclosure provides an electrical device, including the secondary battery according to the second aspect of the present disclosure.

## BRIEF DESCRIPTION OF THE DRAWINGS

FIG. 1A is a schematic structural diagram of a negative electrode according to an embodiment of the present disclosure.

FIG. 1B is another schematic structural diagram of a negative electrode according to an embodiment of the present disclosure.

FIG. 2 is a schematic diagram of a secondary battery according to an embodiment of the present disclosure.

FIG. 3 is a schematic diagram of an electrical device according to an embodiment of the present disclosure.

## DETAILED DESCRIPTION

The embodiments of the present disclosure will be described below with reference to the accompanying drawings in the embodiments of the present disclosure.

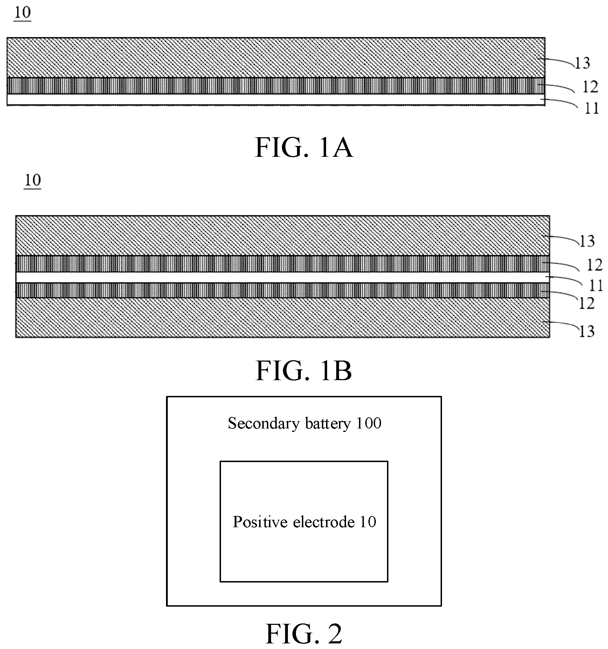

Referring to FIG. 1A and FIG. 1B, an embodiment of the present disclosure provides a positive electrode 10. The positive electrode 10 includes a positive electrode current collector 11, and a first positive electrode coating 12 and a second positive electrode coating 13 stacked in sequence on at least one surface of the positive electrode current collector 11. The first positive electrode coating 12 includes a first positive electrode active material and an inorganic filler having no electrochemical activity. The second positive electrode coating 13 includes a second positive electrode active material. A number n of particle packing layers in the first positive electrode coating 12 is defined to satisfy the following relational expression:

$$n= T\times(M+1)/(M\times D^1_v50+D^2_v50),$$

and n ranges from 4 to 7;

where T represents a thickness of the first positive electrode coating 12, measured in $\mu$m; M represents a mass ratio of the first positive electrode active material to the inorganic filler; and $D^1_v50$ represents a particle size value of the first positive electrode active material when a cumulative volume percentage of the first positive electrode active material reaches 50%, and $D^2_v50$ represents a particle size value of the inorganic filler when a cumulative volume percentage of the inorganic filler reaches 50% (i.e., $D^1_v50$ represents a median particle size of the first positive electrode active material, and $D^2_v50$ represents a median particle size of the inorganic filler), both measured in $\mu$m; and where $D^1_v50$ ranges from 0.6 $\mu$m to 1.2 $\mu$m, and $D^2_v50$ ranges from 0.6 $\mu$m to 1.5 $\mu$m.

In the positive electrode, two positive electrode coatings are arranged on one side of the positive electrode current collector 11 at the same time, and the first positive electrode coating 12 close to the positive electrode current collector 11 is controlled to include the first positive electrode active material and the inorganic filler at the same time. The first positive electrode coating 12 can provide a safety protection function, and with the high thermal stability and electrical non-conductivity of the inorganic filler therein, the possibility of the positive electrode current collector 11 contacting the negative electrode active material layer in an abnormal case such as that where the battery is squeezed, impacted, or penetrated by a nail can be reduced, thereby reducing the probability of short circuit in the battery. In the initial stage of short circuit inside the battery, the inorganic filler with good thermal conductivity can also transfer Joule heat generated by the short circuit as soon as possible, to reduce the concentration of heat and the continuous increase in battery core temperature, thereby improving the battery safety. In addition, the presence of the inorganic filler also reduces the distribution sites of the active material in the first positive electrode coating, and reduces the risk of oxidative decomposition of the electrolyte solution, thereby reducing the generation of heat in the decomposition reaction. The first positive electrode active material can participate in the charging and discharging process of the battery during normal operation, and make contributions to the capacity, thereby reduce the loss of energy density and the increase in the internal resistance of the battery core caused by the use of a safety coating having no electrochemical activity (e.g., a filler layer).

It is found that the number of layers and the bulk density of particles of the first positive electrode active material and particles of the inorganic filler in the first positive electrode coating 12 have a large impact on the safety and internal resistance of the battery, but the industry has paid little attention to this point. In the present disclosure, a relationship is established between the thickness T of the first positive electrode coating 12, the mass ratio M of the particles of the first positive electrode active material to the particles of the inorganic filler, and the median particle sizes (i.e., Dv50) of the two types of particles, a quantitative relational expression is defined for the number n of particle packing layers n in the first positive electrode coating 12, n is controlled to be within a range of 4 to 7, the median particle size of the particles of the first positive electrode active material is controlled within a range of 0.6 $\mu$m to 1.2 $\mu$m, and the median particle size of the inorganic filler is controlled within a range of 0.6 $\mu$m to 1.5 $\mu$m. This ensures that the number of packing layers and density of particles in the first positive electrode coating are appropriate, to effectively protect the positive electrode current collector 11 without sacrificing the energy density of the battery too much, and prevent the internal resistance of the battery from increasing too much to affect the cycle performance and other electrochemical performance of the battery.

Specifically, when n is less than 4, the number of particle packing layers in the first positive electrode coating 12 is too low and the particle packing is too loose. Consequently, the first positive electrode coating 12 cannot well protect the positive electrode current collector 11 in an abnormal case such as that where the battery is squeezed, impacted, or penetrated by a nail, the positive electrode current collector 11 is likely to directly contact the negative electrode active material layer, and the safety of the battery cannot be guaranteed. When n is greater than 7, the number of particle packing layers in the first positive electrode coating 12 is too high and the particle packing is too dense. Consequently, the internal resistance of the battery core increases too much, making it difficult for the electrolyte solution to set the first positive electrode coating 12, affecting the cycle performance of the battery, etc. In addition, the median particle sizes of the particles of the first positive electrode active material and the particles of the inorganic filler do not differ greatly, to ensure that the degree of packing of the two types of particles after mixing will not be too dense.

$D^1_v50$ of the particles of the first positive electrode active material may be 0.6 μm, 0.7 μm, 0.8 μm, 0.9 μm, 1 μm, 1.1 μm, 1.2 μm, etc. In some embodiments, $D^1_v50$ ranges from 0.6 μm to 0.9 μm. $D^2_v50$ of the inorganic filler may be 0.6 μm, 0.7 μm, 0.8 μm, 0.9 μm, 1 μm, 1.1 μm, 1.2 μm, 1.3 μm, 1.4 μm, 1.5 μm, etc.

In the present disclosure, the specific value of $D^1_v50$ may be obtained from a particle size distribution graph of the first positive electrode active material obtained by a laser diffraction method. For the test method, see GB/T 19077-2016/ISO 13320:2009 "Particle size analysis - Laser diffraction methods". The test instrument is generally a laser particle size analyzer (e.g., Malvern 3000 laser particle size analyzer). Similarly, $D^2_v50$ may be obtained from a particle size distribution graph of the inorganic filler obtained by a laser diffraction method. A particle size $D_v50$ of a material when a cumulative volume percentage of particles of the material reaches 50% may also be referred to as a "median particle size" of the material. In addition, T may be obtained by directly measuring or indirectly measuring the thickness of the first positive electrode coating 12. M may be obtained by analyzing the composition of the first positive electrode coating 12.

It should be noted that, in the present disclosure, the stack structure including the first positive electrode coating 12 and the second positive electrode coating 13 may be provided on one surface of the positive electrode current collector 11 (as shown in FIG. 1A), or may be provided on two opposing surfaces of the positive electrode current collector 11 (as shown in FIG. 1B). When the stack structure is provided on each of the two opposing surfaces of the positive electrode current collector 11, only the first positive electrode coating of the stack structure on one of the surfaces needs to satisfy the condition that the parameter n is in the range of 4 to 7. Certainly, the first positive electrode coatings in the stack structures on the two surfaces of the positive electrode current collector may both satisfy the condition that the parameter n is in the range of 4 to 7. The positive electrode current collector 11 may include an aluminum foil, an aluminum alloy foil, an aluminum-plated organic film, a carbon-coated aluminum foil, a carbon-coated aluminum alloy foil, a carbon-coated aluminum-plated organic film, etc. In some embodiments, the positive electrode current collector 11 is an aluminum foil or an aluminum alloy foil.

In an embodiment of the present disclosure, the mass ratio M of the first positive electrode active material to the inorganic filler may range from 1 to 5. When M is in this range, the safety protection effect of the first positive electrode coating 12 and the energy density of the battery can be ensured.

To ensure that the first positive electrode coating 12 has good safety performance, in an embodiment of the present disclosure, the thickness T of the first positive electrode coating 12 may be controlled to be within a range of 2 μm to 10 μm. Herein, the thickness T means the thickness of a single layer of the first positive electrode coating. In some embodiments, the thickness T of the first positive electrode coating 12 may range from 4 μm to 7 μm. In this case, the thickness of the first positive electrode coating 12 is appropriate to provide an effective safety protection effect and further improve the capacity performance of the positive electrode.

In an embodiment of the present disclosure, a thermal decomposition temperature of the inorganic filler is greater than or equal to 300°C. The inorganic filler has good thermal stability, will not fail before occurrence of thermal runaway of the battery, and ensures that the first positive electrode coating 12 effectively provides a safety function. In some embodiments, the inorganic filler may include one or more of boehmite, alumina, zirconia, silica, magnesium hydroxide, etc. A thermal decomposition starting temperature of boehmite is about 350°C. A thermal decomposition starting temperature of magnesium hydroxide is about 340°C.

In some embodiments, the inorganic filler is boehmite. The boehmite has good thermal conductivity and low hardness, and can transfer Joule heat generated by short circuit in the battery core as soon as possible to reduce the concentration of heat. In addition, because the Mohs hardness of boehmite is lower than 5, the low hardness causes little damage to the coating equipment during coating the slurry for preparing the first positive electrode coating 12, and ensures the flatness of the first positive electrode coating 12 to facilitate the attachment of the second positive electrode coating 13 to the first positive electrode coating 12, thereby ensuring a high product yield of mass production.

In the present disclosure, the first positive electrode coating 12 may further include a first binder and a first conductive agent, and the second positive electrode coating 13 further includes a second binder and a second conductive agent. The presence of the binders and the conductive agents in the two positive electrode coatings can ensure good adhesion and electrical conductivity of the coatings. The first binder, the second binder, the first conductive agent, and the second conductive agent may be conventional choices in the battery field. The first binder and the second binder are independently selected from one or more of polyvinylidene fluoride (PVDF), a vinylidene fluoride-hexafluoropropylene copolymer, a vinylidene fluoride-acrylic acid copolymer, polytetrafluoroethylene (PTFE), polyacrylic acid (PAA), polyacrylate (e.g., polymethyl methacrylate, polymethyl acrylate, polyethyl acrylate, etc.), polyvinyl alcohol (PVA), polyimide (PI), polyurethane, epoxy resin, styrene-butadiene rubber (SBR), fluorinated rubber, sodium carboxymethyl cellulose (CMC-Na), etc. The first conductive agent and the second conductive agent are independently selected from one or more of conductive carbon black (e.g., acetylene black, Ketjen black, Super P, 350G carbon black, etc.), graphite, carbon fiber, carbon nanotubes, graphene, etc., but are not limited thereto.

In some embodiments, a percentage by weight of the first binder in the first positive electrode coating 12 is greater than a percentage by weight of the second binder in the second positive electrode coating 13. The content of the binder in the first positive electrode coating 12 is higher than that in the second positive electrode coating 13, to ensure a stronger adhesion between the first positive electrode coating 12 and the positive electrode current collector 11. As such, in an abnormal case such as that where the battery is squeezed, impacted, or penetrated by a nail, even if the second positive electrode coating 13 falls off, the first positive electrode coating 12 does not fall off from the surface of the positive electrode current collector 11, thereby preventing the positive electrode current collector 11 from contacting the negative electrode active material layer, increasing the short-circuit resistance, reducing the risk of thermal runaway of the battery core, and better improving the safety performance of the battery.

In addition, when the condition that the percentage by weight of the binder in the first positive electrode coating 12 is higher than that in the second positive electrode coating 13, if the percentage by weight of the first positive electrode active material in the first positive electrode coating 12 is the same as the percentage by weight of the second positive electrode active material in the second positive electrode coating 13, the percentage by weight of the first conductive agent in the first positive electrode coating 12 is lower than the percentage by weight of the second conductive agent in the second positive electrode coating 13. In this way, the first positive electrode coating 12 with slightly lower electrical conductivity can better wrap and passivate the positive electrode current collector 11 in the case of battery abuse, and reduce the contact of the positive electrode current collector 11 with the negative electrode of the battery.

In an embodiment of the present disclosure, a percentage by weight of the first binder in the first positive electrode coating 12 is 5% to 10%, for example, 5%, 6%, 7%, 8%, 9%, 9.5%, etc. The percentage by weight of the first binder can not only ensure a good bonding effect, but also make the content of the first positive electrode active material in the first positive electrode coating 12 appropriate, thereby further improving the energy density of the battery.

In an embodiment of the present disclosure, a percentage by weight of the first conductive agent in the first positive electrode coating 12 is 1% to 3%. This ensures an appropriate electrical conductivity of the first positive electrode coating 12 to render the battery with excellent low-temperature performance, rate performance, cycle performance, etc., and can also increase the short-circuit internal resistance to further improve the safety of the battery.

In some embodiments of the present disclosure, the first positive electrode coating 12 may include the following components in percentage by weight: 50% to 85% of the first positive electrode active material, 10% to 40% of the inorganic filler, 5% to 10% of the first binder, and 1% to 3% of the first conductive agent.

The second positive electrode coating 13 in the present disclosure is equivalent to a positive electrode active material layer of a conventional battery. In a conventional battery, no safety coating is provided between the positive electrode active material layer and the positive electrode current collector 11. Therefore, the second positive electrode coating 13 is a conventional constituent in the battery field, and mainly functions to make contributions to energy.

In some embodiments of the present disclosure, the second positive electrode coating 13 may include the following components in percentage by weight: 90% to 99% of the second positive electrode active material, 0.5% to 1.5% of the second binder, and 0.5% to 1.5% of the second conductive agent.

In the present disclosure, the first positive electrode active material and the second positive electrode active material may be the same or different materials, and may be independently selected from one or more of lithium iron phosphate, lithium manganese iron phosphate, lithium vanadium phosphate, lithium vanadyl phosphate, lithium vanadium fluorophosphate, lithium cobaltate, lithium manganate, lithium nickelate, lithium vanadate, lithium titanate, lithium nickel manganese oxide, lithium nickel cobalt oxide, lithium nickel cobalt manganate, lithium nickel cobalt aluminum oxide, a lithium-rich manganese-based material, etc. These positive electrode active materials may be undoped or modified by doping, and may or may not have a cladding layer on the surface. Generally, phosphate-based active materials generally have a coating layer.

To ensure good safety of the battery, in an embodiment of the present disclosure, the structural stability of the first positive electrode active material is higher than the structural stability of the second positive electrode active material. In this case, the first positive electrode active material and the second positive electrode active material are different materials. In some embodiments, the first positive electrode active material is a phosphate-based active material, and the second positive electrode active material is a layered transition metal oxide. Specifically, the first positive electrode active material may include one or more of lithium iron phosphate, lithium manganese iron phosphate, lithium vanadium phosphate, lithium vanadyl phosphate, lithium vanadium fluorophosphate, etc. The second positive electrode active material may include one or more of lithium cobaltate, lithium manganate, lithium nickelate, lithium vanadate, lithium titanate, lithium nickel manganese oxide, lithium nickel cobalt oxide, lithium nickel cobalt manganate, lithium nickel cobalt aluminum oxide, a lithium-rich manganese-based material, etc. In some embodiments, the second positive electrode active material is lithium cobaltate having a high operating voltage and a high specific capacity.

In an embodiment of the present disclosure, a median particle size (which may be defined as $D_V^3 50$) of the second positive electrode active material ranges from 6 $\mu$m to 18 $\mu$m. In this case, the median particle size of the second positive electrode active material is large, so that the specific surface area of the second positive electrode active material is controlled within a reasonable range, thereby achieving a high structural stability and facilitating the conduction of lithium ions. In some embodiments, the median particle size of the second positive electrode active material ranges from 14 $\mu$m to 16 $\mu$m.

The positive electrode 10 may be prepared by the following method. On at least one surface of the positive electrode current collector 11, a first positive electrode slurry containing the first positive electrode active material, the inorganic filler, the first binder, and the first conductive agent is coated and dried to form the first positive electrode coating 12, and then a second positive electrode slurry containing the second positive electrode active material, the second binder, and the second conductive agent is coated and dried to form the second positive electrode coating 13, followed by pressing to obtain a positive electrode.

One or two sides of the positive electrode current collector may be coated. In other words, the stack structure including the first positive electrode coating and the second positive electrode coating may be formed on one surface of the positive electrode current collector, or may be formed on two opposing surfaces of the positive electrode current collector. When the two sides of the positive electrode current collector are coated, only the first positive electrode coating on one of the sides needs to satisfy the definition that the parameter n is in the above range.

Referring to FIG. 2, an embodiment of the present disclosure further provides a secondary battery 100. The secondary battery 100 includes the positive electrode 10 described above. Because the secondary battery 100 includes the positive electrode 10 described above, the secondary battery 100 has good safety performance and high energy density.

The secondary battery may be a liquid-state battery using a liquid electrolyte, or a semi-solid-state or solid-state battery using a semi-solid-state or solid-state electrolyte. Specifically, the secondary battery may be a lithium secondary battery, a sodium secondary battery, a potassium secondary battery, a magnesium secondary battery, an aluminum secondary battery, a zinc secondary battery, etc.

In some embodiments, the secondary battery may include the positive electrode described above, a negative electrode, and a semi-solid or solid electrolyte between the positive electrode and the negative electrode. In addition, when the semi-solid or solid electrolyte is used, the positive electrode and the negative electrode may further include a semi-solid electrolyte material or a solid electrolyte material.

In some other embodiments, the secondary battery may include the positive electrode described above, a negative electrode, and a separator and an electrolyte solution between the positive electrode and the negative electrode. The secondary battery may be assembled by the following method: stacking the positive electrode, the separator, and the negative electrode in sequence to prepare a battery core; and placing the battery core in a battery housing, injecting an electrolyte solution, and then sealing the battery housing to obtain the secondary battery.

The negative electrode includes a negative electrode current collector and a negative electrode active material layer arranged on a surface of the negative electrode current collector. Specifically, the negative electrode current collector may include, but is not limited to, a copper foil, a copper alloy foil, a carbon-coated copper foil, a copper-plated thin film, etc. A negative electrode active material in the negative electrode active material layer includes, but is not limited to, one or more of a carbon material, a silicon-based material, a tin-based material, or lithium titanate. The carbon material includes one or more of soft carbon, hard carbon, carbon fibers, graphitized carbon microbeads, artificial graphite, or natural graphite. The silicon-based material may include one or more of elemental silicon, a silicon alloy, a silicon oxide, a silicon-carbon composite material, etc. The tin-based material may include one or more of elemental tin, a tin oxide, tin-based alloy, a tin-carbon compound, etc.

The separator is generally a porous substrate for active ions to pass through. The separator may be a single-layer or multi-layer structure. For example, the separator may include, but is not limited to, a polymer separator such as a single-layer PP film, a single-layer polyethylene (PE) film, a double-layer PP/PE film, a double-layer PP/PP film, or a three-layer PP/PE/PP film, a nonwoven fabric, etc. The electrolyte solution generally contains an electrolyte salt containing active ions (e.g., a lithium salt), a solvent (e.g., an organic solvent), an optional additive, etc. The organic solvent may include, but is not limited to, one or more of ethylene carbonate, propylene carbonate, dimethyl carbonate, ethyl methyl carbonate, propyl propionate, ethyl propionate, ethyl acetate, etc.

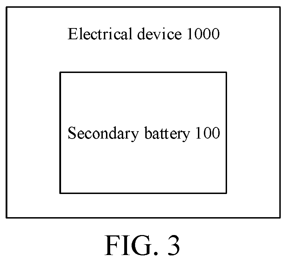

Referring to FIG. 3, an embodiment of the present disclosure further provides an electrical device 1000. The electrical device 1000 includes the secondary battery 100 according to the embodiments of the present disclosure. The electrical device 1000 may be a vehicle, such as an automobile (e.g., an electric vehicle), a boat, etc., or may be a 3C product (e.g., a mobile phone, a tablet computer, or a smart band), etc.

The technical solutions of the present disclosure will be further described below through multiple examples.

Example 1

A positive electrode was prepared by the following steps.

(1) A first positive electrode active material (specifically lithium iron phosphate having a median particle size $D^1_v50$ of 0.8 μm as shown in Table 1), an inorganic filler (specifically boehmite, having a median particle size $D^2_v50$ of 0.8 μm and a thermal decomposition starting temperature of 350°C), a binder (specifically PVDF), and a conductive agent (specifically conductive carbon black) were mixed in a solvent N-methylpyrrolidone (NMP) according to a mass ratio of 57:30:10:3 (where the parameter M is 1.9), and uniformly stirred to obtain a first positive electrode slurry.

A second positive electrode active material (specifically lithium cobaltate having a median particle size $D^3 50$ of 16 $\mu$m), a binder (specifically PVDF), and a conductive agent (specifically conductive carbon black) were mixed in a solvent NMP according to a mass ratio of 98:1:1, and stirred uniformly to obtain a second positive electrode slurry.

(2) The first positive electrode slurry was coated on one surface of an aluminum foil and dried to form a first positive electrode coating having a thickness T of 5 $\mu$m. Then, a second positive electrode slurry is coated on the first positive electrode coating and dried to form a second positive electrode coating having a thickness of 47 $\mu$m. Then, a first positive electrode coating and a second positive electrode coating are formed in sequence on another surface of the aluminum foil in the same manner to obtain a double-sided electrode. Finally, the double-sided electrode rolled to obtain a positive electrode for later use.

A lithium secondary battery was prepared by the following steps.

1) Preparation of negative electrode: A negative electrode active material (specifically artificial graphite), conductive carbon black, SBR, and carboxymethyl cellulose (CMC) were dispersed in deionized water according to a mass ratio of 97:1:1:1, and stirred uniformly to obtain a negative electrode slurry. The negative electrode slurry was coated on two opposing surfaces of a copper foil, dried, and rolled to obtain a negative electrode.

2) Assembly of battery: The positive electrode of Example, a separator, and the negative electrode were stacked in sequence and wound to form a battery core. The battery core was packaged in an aluminum-plastic film housing. Then, an electrolyte solution was injected into the battery housing. After formation, venting, secondary packaging, and capacity grading, a lithium-ion battery was obtained. The lithium-ion battery has a 2C charging system with a capacity of 4500 mAh and a charging cut-off voltage of 4.45 V

Other examples

Positive electrodes and secondary batteries of other examples were prepared based on parameters in Table 1 below by using the methods for preparing the positive electrode and the secondary battery described in Example 1. Calculation results of the parameter n defined above are also summarized in Table 1.

Comparative Example 1

Comparative Example 1 is different from Example 1 in that the first positive electrode coating does not include the inorganic filler having no electrochemical activity.

Comparative Example 2

Comparative Example 2 is different from Example 1 in that the positive electrode does not include the first positive electrode coating.

Table 1 Table of parameters of positive electrodes in the examples and comparative examples and test data of batteries

| Example | Inorganic filler | $D^1_v 50$ ($\mu$m) | $D^2_v 50$ ($\mu$m) | T ($\mu$m) | M | n | Increase in internal resistance | Nail penetration test passing rate |
|---|---|---|---|---|---|---|---|---|
| Example 1 | Boehmite | 0.8 | 0.8 | 5 | 1.9 | 6.25 | 19% | 100% |
| Example 2 | Boehmite | 0.8 | 0.8 | 4 | 1.9 | 5.00 | 18% | 100% |
| Example 3 | Boehmite | 0.8 | 1 | 5 | 1.9 | 5.75 | 24% | 100% |
| Example 4 | Boehmite | 0.8 | 1.5 | 5 | 1.9 | 4.80 | 28% | 100% |
| Example 5 | Boehmite | 1 | 0.8 | 5 | 1.9 | 5.37 | 19% | 100% |
| Example 6 | Boehmite | 1.2 | 0.8 | 5 | 1.9 | 4.71 | 18% | 100% |
| Example 7 | Magnesium hydroxide | 0.8 | 0.8 | 5 | 1.9 | 6.25 | 19% | 100% |
| Example 8 | Boehmite | 0.6 | 0.8 | 4 | 1.9 | 5.98 | 27% | 100% |
| Example 9 | Boehmite | 0.9 | 0.8 | 5 | 1.9 | 5.78 | 19% | 100% |

(continued)

| Example | Inorganic filler | $D^1_v50$ (μm) | $D^2_v50$ (μm) | T (μm) | M | n | Increase in internal resistance | Nail penetration test passing rate |
|---|---|---|---|---|---|---|---|---|
| Example 10 | Boehmite | 0.6 | 0.6 | 2.4 | 1 | 4 | 24% | 100% |
| Example 11 | Boehmite | 1.2 | 0.8 | 7 | 1.9 | 6.59 | 28% | 100% |
| Example 12 | Boehmite | 1.2 | 1.5 | 10 | 0.3 | 6.99 | 29% | 100% |
| Example 13 | Boehmite | 0.8 | 0.8 | 4 | 1 | 5.00 | 28% | 100% |
| Example 14 | Boehmite | 0.6 | 0.8 | 4 | 5 | 6.32 | 19% | 100% |
| Comparative Example 1 | / | 0.8 | / | 5 | / | 6.25 | 17% | 50% |
| Comparative Example 2 | / | / | / | / | / | / | 0% | 0% |
| Comparative Example 3 | Boehmite | 0.8 | 0.8 | 7 | 1.9 | 8.75 | 53% | 100% |
| Comparative Example 4 | Boehmite | 0.8 | 0.8 | 6 | 1.9 | 7.50 | 37% | 100% |
| Comparative Example 5 | Boehmite | 0.8 | 0.8 | 3 | 1.9 | 3.75 | 15% | 70% |
| Comparative Example 6 | Boehmite | 0.8 | 0.8 | 2 | 1.9 | 2.50 | 12% | 30% |
| Comparative Example 7 | Boehmite | 0.8 | 0.2 | 5 | 1.9 | 8.43 | 56% | 100% |
| Comparative Example 8 | Boehmite | 0.8 | 0.5 | 5 | 1.9 | 7.18 | 34% | 100% |
| Comparative Example 9 | Boehmite | 0.8 | 2 | 5 | 1.9 | 4.12 | 63% | 100% |
| Comparative Example 10 | Boehmite | 0.2 | 0.8 | 5 | 1.9 | 12.29 | 71% | 100% |
| Comparative Example 11 | Boehmite | 0.5 | 0.8 | 5 | 1.9 | 8.29 | 43% | 100% |
| Comparative Example 12 | Boehmite | 1.5 | 0.8 | 5 | 1.9 | 3.97 | 10% | 80% |
| Comparative Example 13 | Boehmite | 1.7 | 0.8 | 5 | 1.9 | 3.60 | 10% | 50% |

To highlight the beneficial effects of the technical solutions of the present disclosure, the following performance tests were also performed on the lithium-ion batteries. The results are also summarized in Table 1 above.

(1) Internal resistance test

Each of the lithium-ion batteries was placed in a normal temperature environment (23°C to 25°C), charged at a constant current of 0.2C to 3.95 V, and then charged at a constant voltage of 3.95 V to a cut-off current of 0.01C. Then, the internal resistance of the battery core was tested with a 1 kHz alternating-current (AC) internal resistance meter. 10 batteries were tested for each example or comparative example, and the test results were averaged. Using the internal resistance (about 25 mΩ) of the battery of Comparative Example 2 as a reference, internal resistance increase rates of the batteries in the examples and the other comparative examples were calculated. If the internal resistance increase rate was 30% or less, it was considered that the internal resistance test was passed.

(2) Nail penetration test

Each of the lithium-ion batteries was placed in a normal temperature environment (23°C to 25°C), charged at a constant current of 0.2C to 4.45 V, and then charged at a constant voltage of 4.45 V to a cut-off current of 0.025C. Then, the lithium-ion battery was fixed in a needle penetration test equipment at an ambient temperature of 23°C to 25°C and a humidity of 40% to 60%. The center of the lithium-ion battery was pierced with a steel needle with a diameter of 3 mm at a constant speed of 50 mm/s. The steel needle was left in the battery for 10 minutes and then pulled out to observe whether the battery caught fire or exploded. 10 batteries were tested for each example or comparative example. The number of batteries that did not catch fire or explode was recorded to obtain a nail penetration test passing rate. When the nail penetration test passing rate was 100%, it was considered that the nail penetration test was passed.

According to Table 1, when the positive electrode of the embodiments of the present disclosure was constructed in such a manner that the defined particle packing parameter n in the first positive electrode coating was in the range of 4 to 7 and the averaged particle sizes of the first positive electrode active material and the second positive electrode active material were respectively in the range of 0.6 $\mu$m to 1. 2 $\mu$m and in the range of 0.6 $\mu$m to 1. 5 $\mu$m, the lithium-ion battery prepared using the positive electrode could pass the nail penetration test, indicating good safety performance of the lithium-ion battery. In addition, compared with the battery of Comparative Example 2 not including a safety coating, the internal resistance increase rate of the lithium-ion battery of the embodiments of the present disclosure was as low as 30% or less, which was beneficial to ensuring good cycle performance of the battery.

By comparing Example 1 with Comparative Example 2, it can be seen that when the positive electrode current collector was protected by the first positive electrode coating, and the battery is pierced by a steel needle, the positive electrode current collector did not enter into direct contact with the negative electrode active material, so that the risk of thermal runaway of the lithium-ion battery was significantly reduced. By comparing Example 1 with Comparative Example 1, it can be seen that when an inorganic filler having high thermal stability was added to the first positive electrode coating, the safety of the battery could be further improved.

By comparing Examples 1 and 2 with Comparative Examples 3 to 6, it can be seen that in the case where the median particle sizes of the particles of the first positive electrode active material and the particles of the inorganic filler remained unchanged, when the thickness T of the first positive electrode coating made the number n of particle packing layers defined in the present disclosure less than 4 (as in Comparative Examples 5 to 6), the nail penetration test passing rate of the battery decreased, indicating that the first positive electrode coating could not effectively provide a safety protection function; and when n exceeded 7 (as in Comparative Examples 3 to 4), the internal resistance increase rate of the battery was too large and exceeded 30% compared with Comparative Example 2 not including the first positive electrode coating. When the number n of particle packing layers was greater than 4 and less than 7 (as in Examples 1 to 2), safety could be ensured while ensuring that the internal resistance of the battery did not increase too much.

By comparing Examples 1 and Examples 3 to 4 with Comparative Examples 7-9, it can be seen that in the case where the median particle size $D^1_v50$ of the first positive electrode active material (i.e., lithium iron phosphate) and the thickness T of the first positive electrode coating remained unchanged, the median particle size $D^2_v50$ of the inorganic filler having no electrochemical activity had no significant impact on the safety of the battery, but had a large impact on the internal resistance of the battery. In Comparative Examples 7 and 8, the median particle size of the inorganic filler was too small, resulting in that the number n of particle packing layers was greater than 7 and the internal resistance increase rate of the battery exceeded 30%. In Comparative Example 9, the median particle size of the inorganic filler was too large, and correspondingly the internal resistance increase rate of the battery was too large. This was mainly because the inorganic filler is an insulator of electrons and ions, and its excessively large particle size might cause the interruption of local electron and ion pathways in the first positive electrode coating, leading to a greatly increased internal resistance of the battery. When the median particle size of the inorganic filler ranged from 0.8 $\mu$m to 1. 5 $\mu$m, an appropriate number of packing layers could be achieved, and the increase in the internal resistance of the battery could be controlled within a small range.

By comparing Example 1, Examples 5 to 6, and Comparative Examples 10 to 13, it can be seen that in the case where the thickness T of the first positive electrode coating and the median particle size $D^2_v50$ of the inorganic filler remained unchanged, the median particle size of the first positive electrode active material (i.e., lithium iron phosphate) had a significant impact on the safety performance and internal resistance of the battery. When the median particle size of lithium iron phosphate was too small (e.g., as in Comparative Examples 10 to 11), the number n of particle packing layers in the first positive electrode coating was too high, and the packing of small particles was denser, leading to an excessively high internal resistance increase rate of the battery. When the median particle size of lithium iron phosphate was too large (e.g., as in Comparative Examples 12 to 13), the internal resistance increase rate of the battery was very small, but the nail penetration test passing rate significantly decreased. This might be due to the fact that the excessively large particle size led to an excessively small value of n and the first positive electrode coating could not provide an effective protection function.

The above embodiments are merely illustrative of several exemplary implementations of the present disclosure, and the description is specific and particular, but is not to be construed as limiting the scope of the present disclosure. It should be pointed out that for those of ordinary skill in the art, several variations and improvements can be made without departing from the concept of the present disclosure, which are all regarded as falling within the protection scope of the present disclosure. Therefore, the protection scope of the present disclosure is defined by the appended claims.

**Claims**

1. A positive electrode (10), comprising:

   a positive electrode current collector (11);
   a first positive electrode coating (12), stacked on at least one surface of the positive electrode current collector (11), and comprising a first positive electrode active material and an inorganic filler having no electrochemical activity; and
   a second positive electrode coating (13), stacked on a surface of the first positive electrode coating (12) facing away from the positive electrode current collector (11), and comprising a second positive electrode active material;
   a number n of particle packing layers in the first positive electrode coating (12) being defined to satisfy the following relational expression:

   $$n= T\times(M+1)/(M\times D^1{}_v50+D^2{}_v50),$$

   and n ranges from 4 to 7;
   wherein T represents a thickness of the first positive electrode coating (12), measured in $\mu$m; M represents a mass ratio of the first positive electrode active material to the inorganic filler; and $D^1{}_v50$ represents a median particle size of the first positive electrode active material, measured in $\mu$m, and $D^2{}_v50$ represents a median particle size of the inorganic filler, measured in $\mu$m; and wherein $D^1{}_v50$ ranges from 0.6 $\mu$m to 1.2 $\mu$m, and $D^2{}_v50$ ranges from 0.6 $\mu$m to 1.5 $\mu$m.

2. The positive electrode (10) according to claim 1, wherein $D^1{}_v50$ ranges from 0.6 $\mu$m to 0.9 $\mu$m.

3. The positive electrode (10) according to claim 1 or 2, wherein T ranges from 2 $\mu$m to 10 $\mu$m.

4. The positive electrode (10) accirding to claim 3, wherein T ranges from 4 $\mu$m to 7 $\mu$m.

5. The positive electrode (10) according to any one of claims 1 to 4, wherein M ranges from 1 to 5.

6. The positive electrode (10) according to any one of claims 1 to 5, wherein a thermal decomposition temperature of the inorganic filler is greater than or equal to 300°C.

7. The positive electrode (10) according to any one of claims 1 to 6, wherein the inorganic filler comprises one or more of boehmite, alumina, zirconia, silica, or magnesium hydroxide.

8. The positive electrode (10) according to any one of claims 1 to 7, wherein the first positive electrode active material comprises one or more of lithium iron phosphate, lithium manganese iron phosphate, lithium vanadium phosphate, lithium vanadyl phosphate, or lithium vanadium fluorophosphate; and the second positive electrode active material comprises one or more of lithium cobaltate, lithium manganate, lithium nickelate, lithium vanadate, lithium titanate, lithium nickel manganese oxide, lithium nickel cobalt oxide, lithium nickel cobalt manganate, lithium nickel cobalt aluminum oxide, or a lithium-rich manganese-based material.

9. The positive electrode (10) according to any one of claims 1 to 8, wherein a median particle size of the second positive electrode active material ranges from 6 $\mu$m to 18 $\mu$m.

10. The positive electrode (10) according to any one of claims 1 to 9, wherein the first positive electrode coating (12) further comprises a first binder and a first conductive agent, and the second positive electrode coating (13) further comprises a second binder and a second conductive agent.

11. The positive electrode (10) according to claim 10, wherein a percentage by weight of the first binder in the first positive electrode coating (12) is greater than a percentage by weight of the second binder in the second positive electrode coating (13).

12. The positive electrode (10) according to claim 10 or 11, wherein a percentage by weight of the first binder in the first positive electrode coating (12) ranges from 5% to 10%; and a percentage by weight of the first conductive agent in the first positive electrode coating (12) ranges from 1% to 3%.

13. The positive electrode (10) according to any one of claims 10 to 12, wherein the first binder and the second binder independently comprise one or more of polyvinylidene fluoride (PVDF), a vinylidene fluoride-hexafluoropropylene copolymer, a vinylidene fluoride-acrylic acid copolymer, polytetrafluoroethylene (PTFE), polyacrylic acid (PAA), polyacrylate, polyvinyl alcohol (PVA), polyimide (PI), polyurethane, epoxy resin, styrene-butadiene rubber (SBR), fluorinated rubber, or sodium carboxymethyl cellulose (CMC-Na).

14. The positive electrode (10) according to any one of claims 10 to 13, wherein the first conductive agent and the second conductive agent independently comprise one or more of conductive carbon black, graphite, carbon fiber, carbon nanotubes, or graphene.

15. The positive electrode (10) according to any one of claims 10 to 14, wherein the first positive electrode coating (12) comprises the following components in percentage by weight: 50% to 85% of the first positive electrode active material, 10% to 40% of the inorganic filler, 5% to 10% of the first binder, and 1% to 3% of the first conductive agent.

16. The positive electrode (10) according to any one of claims 10 to 15, wherein the second positive electrode coating (13) comprises the following components in percentage by weight: 90% to 99% of the second positive electrode active material, 0.5% to 1.5% of the second binder, and 0.5% to 1.5% of the second conductive agent.

17. A secondary battery (100), comprising the positive electrode (10) according to any one of claims 1 to 16.

18. An electrical device (1000), comprising the secondary battery (100) according to claim 17.

10

13
12
11

# FIG. 1A

10

13
12
11
12
13

# FIG. 1B

Secondary battery 100

Positive electrode 10

# FIG. 2

Electrical device 1000

Secondary battery 100

## FIG. 3

# INTERNATIONAL SEARCH REPORT

| International application No. |
|---|
| **PCT/CN2023/115279** |

| A. | CLASSIFICATION OF SUBJECT MATTER |
|---|---|

H01M4/62(2006.01)i; H01M4/13(2010.01)i; H01M10/0525(2010.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 正极, 涂层, 第一, 第二, 无机, 填料, 平均粒径, DV50, positive electrode, coating layer, first, second, inorganic, filler, average particle

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 114497566 A (ZHUHAI COSMX BATTERY CO., LTD.) 13 May 2022 (2022-05-13) description, paragraphs 4-70 | 1-18 |
| A | CN 113193162 A (ZHUHAI COSMX BATTERY CO., LTD.) 30 July 2021 (2021-07-30) description, paragraphs 30-81, and figure 1 | 1-18 |
| A | CN 103811727 A (SHANGHAI AEROSPACE POWER TECHNOLOGY CO., LTD.) 21 May 2014 (2014-05-21) entire document | 1-18 |
| A | JP 2015015182 A (GS YUASA CORP.) 22 January 2015 (2015-01-22) entire document | 1-18 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **25 November 2023** | **27 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115279**

| Patent document cited in search report | | | Publication date (day/month/year) | Patent family member(s) | | | Publication date (day/month/year) |
|---|---|---|---|---|---|---|---|
| CN | 114497566 | A | 13 May 2022 | None | | | |
| CN | 113193162 | A | 30 July 2021 | CN | 113193162 | B | 21 October 2022 |
| CN | 103811727 | A | 21 May 2014 | CN | 103811727 | B | 25 May 2016 |
| JP | 2015015182 | A | 22 January 2015 | JP | 6229333 | B2 | 15 November 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211047596

- GB 190772016 T